# EUROPEAN PATENT APPLICATION

(11) **EP 4 730 713 A1**
(43) Date of publication of application: **22.04.2026**
(21) Application number: 25208557.6
(22) Date of filing: 14.10.2025
(51) Int. Cl.: H04L 12/10, B60R 16/023, B60R 16/03, H02J 1/00, H04L 12/40, G06F 1/3287

(54) **MULTI-MODULE POWER MANAGEMENT**

(30) Priority: 21.10.2024 US 202418922284
(71) Applicant: NXP USA, Inc., Austin, TX 78735 (US)
(72) Inventor: Yilmaz, Mehmet Fatih, 5656AG Eindhoven (NL)
(74) Representative: Krott, Michel

(57) **Abstract**

One example discloses a module, including: a set of e-switches configured to be coupled to a power supply line and a set of loads; a communications circuit coupled to the e-switches and configured to be coupled to a communications bus; a controller coupled to the e-switches and the communications circuit; wherein the communications circuit and the controller are powered by the e-switches; wherein the communications circuit and the controller are configured to be in a low-power state until receiving a wake-up signal from the e-switches; and wherein the e-switches are configured to receive the wake-up signal over the power supply line.

## Description

The present specification relates to systems, methods, apparatuses, devices, articles of manufacture and instructions for multi-module power management.

### SUMMARY

According to an example embodiment, a module, comprising: a set of e-switches configured to be coupled to a power supply line and a set of loads; a communications circuit coupled to the e-switches and configured to be coupled to a communications bus; a controller coupled to the e-switches and the communications circuit; wherein the communications circuit and the controller are powered by the e-switches; wherein the communications circuit and the controller are configured to be in a low-power state until receiving a wake-up signal from the e-switches; and wherein the e-switches are configured to receive the wake-up signal over the power supply line.

In another example embodiment, each of the e-switches each have a unique address; and at least one of the e-switches is configured to send the wake-up signal directly to another one of the e-switches by including the unique address in the wake-up signal.

In another example embodiment, the e-switches are configured to receive the wake-up signal over both the power supply line and the communications bus.

In another example embodiment, the e-switches only receive the wake-up signal over the power supply line.

In another example embodiment, the e-switches control power going to the set of loads.

In another example embodiment, an e-switch is configured to continue to supply power to a load even after putting the e-switch itself into a low-power mode.

In another example embodiment, the communications circuit is a PHY circuit.

In another example embodiment, the communications bus is either a CAN bus or an Ethernet bus.

In another example embodiment, the module is embedded in a software defined vehicle (SDV).

In another example embodiment, the wake-up signal is indicated by either a change in a voltage level or a change in a voltage polarity on the power supply line.

In another example embodiment, wherein the module is a first module; further comprising a second module and a third module; wherein the first module is coupled to the second module via a first e-switch in the second module; and wherein the third module is coupled to the second module via a second e-switch in the second module.

In another example embodiment, the second and third modules each include a set of elements that are functional duplicates of those in the first module.

In another example embodiment, the first e-switch in the second module is configured to receive a wake-up signal sent from an e-switch in the first module that is addressed to an e-switch in the third module.

In another example embodiment, the first e-switch in the second module directly passes the received wake-up signal to the second e-switch in the second module.

In another example embodiment, the second e-switch in the second module directly passes the received wake-up signal to the addressed e-switch in the second module.

In another example embodiment, a controller and a communications circuit in the second module remain in a low-power state as the received wake-up signal is directly passed.

In another example embodiment, only the first and second e-switches in the second module are powered on as the received wake-up signal is directly passed.

In another example embodiment, the e-switch in the first module and the e-switch in the third module are only coupled through the first and second e-switches in the second module.

In another example embodiment, the first, second, and third modules are coupled in a hierarchy.

In another example embodiment, the first model and the third module are at a lower-level of the hierarchy, and the second module is at a higher-level of the hierarchy.

In another example embodiment, the first model and the third module are edge-modules, and the second module is a zone or domain module.

In another example embodiment, e-switches in the lower-level of the hierarchy can only communicate through e-switches in the higher-level of the hierarchy.

The above discussion is not intended to represent every example embodiment or every implementation within the scope of the current or future Claim sets. The Figures and Detailed Description that follow also exemplify various example embodiments.

Various example embodiments may be more completely understood in consideration of the following Detailed Description in connection with the accompanying Drawings.

### BRIEF DESCRIPTION OF THE DRAWINGS

Figure 1 represents a first example multi-module power management system.
Figure 2 represents a second example multi-module power management system.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

### DETAILED DESCRIPTION

Modern vehicles contain many power consuming modules and circuits, however at certain times such as when the vehicle is parked, only a few of them are typically kept powered on. Even when the vehicle is fully operational, not all of the circuits (e.g. modules) need to constantly be powered on, but are instead woken up periodically or on demand and then put back to sleep. Such power savings can be particularly important for maximizing a travel range of an electric vehicle.

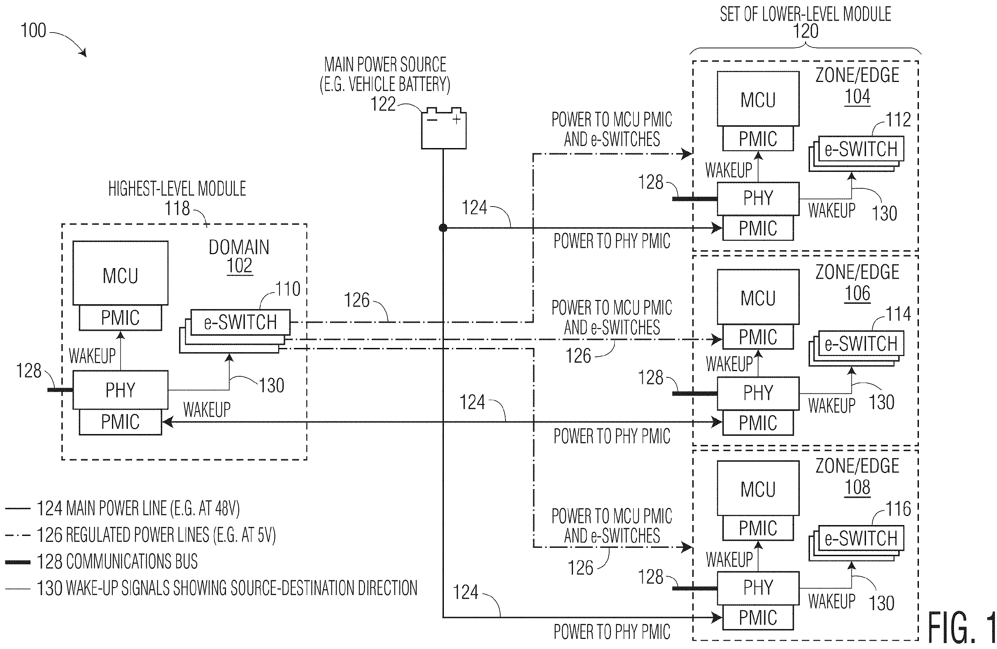

Figure 1 represents a first example multi-module power management system 100. The first example system 100 includes a set of hierarchically ordered modules 102 through 108. In this example, each of the modules 102 through 108 include a set of e-switches 110 through 116, a communications circuit (e.g. PHY with PMIC, as shown), and a controller (e.g. MCU with PMIC, as shown).

Note, a module can be a domain, zone, edge node, etc. Modules can be differentiated by a number and/or power of their MCUs, a number and current levels of e-Switches, and so on. PMIC as used herein refers to a Power Management. Integrated Circuit.

The set of e-switches 110 through 116 are coupled to a set of loads. For example, modules 104 through 108 are herein defined as a set of loads to the e-switch 110 in module 102, while a set of loads (e.g. other modules, circuits, actuators, sensors, etc.) are considered to be coupled to the e-switches 112 through 116 in modules 104 through 108, but are not explicitly shown to not clutter Figure 1.

A highest-level module 118 in the set of hierarchically ordered modules is module 102. A set of lower-level modules 120 in the set of hierarchically ordered modules are modules 104 through 108.

Also shown are a main power source 122 (e.g. 48V vehicle battery), a main power line 124 (e.g. at 48V), a set of regulated power lines 126 (e.g. 5V), a communications bus 128, and a set of wake-up signals 130.

The first example system 100 has a software defined vehicle (SDV) topology. In various SDV applications, pre-defined zones containing a variable number of modules and circuits can be shut down or put into a deep sleep state. For example, SDV architectures differ from traditional vehicle architectures. A SDV includes power distributors, zones, domains, edge nodes, etc. for performing most if not all vehicle functions. Traditional vehicle architectures stand-alone modules that perform individual functions only are typically not used by SDVs. The modules and circuits in a SDV need to be powered, shut down and/or put in low-power modes depending on the SDV's state, which helps conserve power and meter energy, which can be particularly useful for increasing an electric or hybrid vehicle's driving range.

For an SDV (and other vehicles as well) energy saving is crucial while the vehicle is parked but it can become important also to extend range. Therefore, some modules are shut down or put in low-power mode. However, there can be cases in which one module might not need to work, but another module connected one level or even two levels below it might have to work. In some cases, an Edge might be off or in low-power mode, but some loads connected to it might have to keep working and sending data. In other words, while the architecture is hierarchical, power status does not necessarily follow the same hierarchy. Some modules might have different on/off statuses than their superiors and dependents.

In this example 100, the set of lower-level modules 120 (i.e. modules 104 through 108) receive their power from one level up (i.e. the set of regulated power lines 126), and, as introduced earlier, each module also contains e-switches to power modules at one level below them. For a Domain, one level down is a Zone. For a Zone, one level down would be an Edge. For an Edge, one level down is the real actuators, sensors, loads, etc. The number of levels in the hierarchy will depend on a particular OEM, so there is no set rule in the complexity of the architecture.

In the wake-up configuration as shown, the PHYs send, receive and process wake-up signals 130. Once a PHY receives a wake-up signal 130, it wakes up its attached PMIC, which wakes up the attached MCU. The PHY also wakes up any other component on the module that needs to be woken up, though most parts wake up or turn on once the PMICs give them power. A PHY needs to receive some level of power (i.e. from the main power line 124) in order to be able to "hear" and "act upon" a wake-up signal. In topologies where a PHY can receive a wake-up signal, its attached PMIC is already working and powering the PHY (so that it can receive the wake-up signal.) In the case of a CAN transceiver, such PMICs are internal to the CAN PHY, so no separate PMIC is purchased and deployed. When a PHY receives a wake-up signal, it wakes up the PMIC attached to the MCU, which then in turn wakes up the MCU.

Note while in this example 100 the PHYs are powered by an attached PMIC, in other examples the PHYs could be powered by an LDO (Low DropOut Voltage Regulator). The LDO can be internal or external to the PHY.

Even if the module is in a low-power mode, the module is still connected to the main power lines 124, it is just not using a lot of it. In that case, the PHY is powered and it can act upon receiving a wake-up signal over the communications bus 128. The PHY then generates wake-up output signals 130 as shown.

That means, the PHYs need to be powered independently under permanent battery (i.e. from the main power line 124), which requires a separate power network for the PHYs for their wake-up tasks. In other examples, this could be accomplished by powering the PHYs from the communication bus 128. While this is possible with Ethernet, it is not possible with a CAN network. Given the delays in Ethernet-based wake-up, CAN networks are often desired, but they might not offer power over the communication bus 128. Such complications hinder a goal of building a power network and architecture where branches can be completely shut down but could also wake-up on demand.

One of the wake-up requirements in a SDV architecture in that a module/load must wake up if one of its dependent loads starts drawing current above a certain threshold. Another wake-up requirement is to selectively to tell a modules/loads to wake up due to functional necessities which are not necessarily linked to power consumption.

For example, if a module/load is in off state, it can be powered by one level up by activating the dedicated e-switch so that the said module/load wakes-up on power-on. If the said dependent module/load is in low-power mode (and the e-switch powering it at a higher level module is in on state), but it needs to wake up, a wake-up signal must be delivered to that module/load.

If this requirement is to be fulfilled by a PHY, then the PHY should be powered so that it can receive and process the wake-up signal. This is possible if the module is in low-power mode, because the e-switch is still receiving power in the low-power mode, even though the e-switch is not using a lot of power. However, this wake-up process is not possible if the module/load is off, because then PHY would be unpowered along with the rest of the module.

One way to keep the PHY powered and able to listen to wake-up signals while the module/load is completely off would be to provide the PHY with a dedicated power line; however, this would tend to work against the entire purpose of SDV architecture, since dedicated wake-up lines would need to be hard wired to each module's CAN/Ethernet PHY sub-circuit, and each module's CAN/Ethernet PHY circuit would need to be powered separately. Thus completely shutting down an entire zone, domain, and/or edge node would not actually happen as preferred in a SDV architecture.

Thus these CAN and Ethernet networks transmit the wake-up signals over bus communication lines 128 to the PHYs or over dedicated wakeup lines. The PHYs receive, use and/or relay the wake-up signals across the CAN/Ethernet architecture over these existing communication lines 128. While dedicated lines do not consume power, they do complicate wiring and add cost and weight, as each module now needs one extra wire solely dedicated for wake-up signals.

Additionally, the PHYs receiving wake-up signals over the CAN bus 128 need to be constantly powered in order to process the wake-up signals 130, because if they were connected to host modules that could be deactivated, then they would not be able to receive and process the wake-up signals while the host module is shut down. This requires a separate power network, but this defeats the purpose of energy management networks, because the goal is to remove permanent battery connections.

For example, existing wake-up signal flows are based on a top-down and bottom-up wake-up signals. Top-down signals come from higher levels and go to lower levels, such as when a module directly powers a module from off state, or it sends PHY level wake-up signals to wake a module up from low-power mode. Bottom-up signals are when an e-switch generates a wake-up signal because one of its loads exceeds a certain current threshold. However, there will be complicated cases where the straightforward wake-up building blocks could not suffice.

One example complicated case is when a person approaches a vehicle and door handles need to be unlocked. This requires sensors in all corners of the vehicle to receive signals, process them and to generate a wake-up signal that propagates to different Edges and Zones, all the way to door handles. If wake-up signals are supposed to follow the abovementioned bottom-up and then top-down paths, they will require a lot of modules in the middle to be powered, even if it is only the low-power mode. That defeats the purpose of turning modules off for power saving.

Also, with high-voltage vehicle architectures (e.g. 48V) delivering a proper wake-up signal to such PHYs becomes more inefficient to supply dedicated voltage lines to PHYs for the sole purpose of enabling them to receive wake-up signals. For example, the simple LDO circuits used currently to step down a 12V rail voltage to a 5V PHY voltage, are not as effective at stepping down a 48V rail voltage down to the PHY's 5V due to excessive power dissipation.

Now discussed is another approach to power management in multi-module systems. A new topology placing e-switches at the center of the wake-up process/hierarchy reduces wiring while enabling more power savings, particularly for software defined vehicles (SDVs). In this new topology one of the differences is that the e-switches now generate the wake-up signals instead of the PHYs (c.f. with Figure 1).

Some of the many benefits of this different approach to power management in multi-module systems include: removal of a separate permanent power network for supplying PHYs; removal of a separate wake-up wiring network; and no longer requiring PHYs to operate at a high-voltage (e.g. 48V) that would require additional switching converters, add cost and generate additional EMC noise.

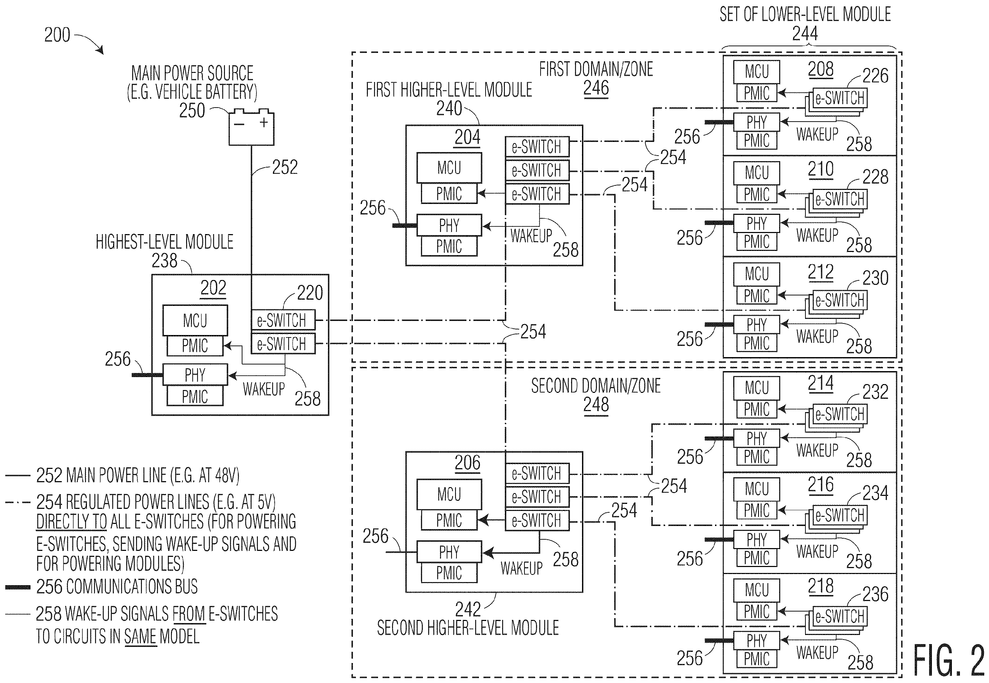

Figure 2 represents a second example multi-module power management system 200. The second example system 200 includes a set of hierarchically ordered modules 202 through 218. In this example, each of the modules 202 through 218 include a set of e-switches 220 through 236, a communications circuit (e.g. PHY with PMIC, as shown), and a controller (e.g. MCU with PMIC, as shown).

In various example embodiments, each module can be partitioned either as domains, zones, edge nodes, etc.; however, Figure 2 shows an example set of partitions which will be further discussed below. These modules can also be differentiated by a number and/or power of their MCUs, a number and current levels of e-Switches, and so on. PMIC as used herein refers to a Power Management. Integrated Circuit.

The set of e-switches 210 through 236 are coupled to a set of loads. These loads can be other modules, circuits, actuators, sensors, and so on. For example, modules 204 and 206 are herein defined as a set of loads to the e-switches 220 in module 202; modules 208 through 212 are herein defined as a set of loads to the e-switches 222 in module 204; and modules 214 through 218 are herein defined as a set of loads to the e-switches 224 in module 206. A set of loads (not shown to reduce clutter in Figure 2) are also coupled to the e-switches 226 through 236 in modules 208 through 218.

In the example embodiment shown in Figure 2, a highest-level module 238 (e.g. for 48V to 5V voltage conversion) in the set of hierarchically ordered modules is module 202. A first higher-level (e.g. intermediate) module 240 is module 204, a second higher-level module 242 is module 206, and a set of lower-level modules 244 are modules 208 through 218.

A possible first domain/zone 246 and second domain/zone 248 are also shown, which is particularly applicable to SDVs.

Also shown are a main power source 250 (e.g. 48V vehicle power supply), a main power line 252 (e.g. at 48V), a set of regulated power lines 254 (e.g. 5V), a communications bus 256, and a set of wake-up signals 258.

E-switches 220 through 236 are electronic switches that control power going to anything attached to them. Such e-switches do not necessarily regulate voltage or current, except perhaps for the operation of certain features like high-voltage cut-out, high-current cut out, current limiting for a certain amount of time before cutting power out. E-switches sometimes are designed to adaptively change the high current cutout threshold on a given wire depending on the temperature of the wire - though this is usually estimated by the current that previously ran across that wire and heated it up.)

In various example embodiments, the e-switches 220 through 236 receive their power from either the main power line 252 (e.g. at 48V) or the set of regulated power lines 254 (e.g. 5V). The e-switches 220 through 236 wake-up on power on, but they also can go to low-power mode via a communication port coupled to listen in on the communications bus 256 to receive on/off commands to turn various loads connected to them on and off, or keep the loads' on/off status as is before putting the e-switch itself into a low-power mode. However in other example embodiments, if a load is kept on while the e-switch is in a low-power mode, an amount of current available to the load could be reduced below the usually available current.

To solve this, e-switch current threshold limits can be set for individual loads for their operation while the e-switch is in low-power mode, such that once a load starts drawing more current than the threshold limit while the e-switch is in a low-power mode, the e-switch wakes itself up and can generate a wake-up signal to turn on the PMIC and MCU and the PHY.

The e-switches 220 through 236 in the second example system 200 are now also a center of the wake-up signal flow. To support this role, many, most or all of the e-switches 220 through 236 each have a unique address so select e-switches can receive wake-up signals 258 directed only to that select e-switch. Similarly, an e-switch's internal logic can generate a wake-up signal/message directed to a specific address of one or more other e-switches. Such wake-up signals/message propagate through the hierarchy only high-enough to go back down the hierarchy to reach the e-switch targeted by the wake-up signal/message (e.g. sometimes "go one level up" other times "go two or more levels up"). In various example embodiments, the controllers (e.g. MCUs) can if needed operate in a very low power mode to facilitate passing of the wake-up signal/message without needing to fully waking up themselves.

In the second example system 200 the wake-up signals 258 are propagated over the set of regulated power lines 254 that couple all the e-switches 220 through 236 together hierarchically. This way, bottom-up wake-up signals 258 requested by the set of lower-level modules 244 can be relayed through the hierarchy first to e-switches in one of the higher-level modules 240, 242 and then to the highest-level module 238 if needed, then returning back down through the higher-level modules 240, 242 to another one of the set of lower-level modules 244 in another domain/zone 246, 248.

This enables power savings in that PHYs, MCUs and their attached or internal PMICs do not need to be powered on or in low-power mode at all. They can stay completely off while the wake-up signals 258 transit through the hierarchy to any other module/load in the entire system 200 (e.g. any module/circuit/load in a SDV vehicle) on the set of regulated power lines 254 without powering any intermediate non-required module unnecessarily.

By propagating wake-up signals 258 over the set of regulated power lines 254, the previous paradox (see Figure 1) of needing power in a module to wake-up a module from unpowered state can also be eliminated. Instead the communications circuits (e.g. PHYs with PMICs) and controllers (e.g. MCUs with PMICs) in the intermediate modules stay off, since the e-switches 220 through 236 do not need to give them power so that the e-switches 220 through 236 can relay and propagate the wake-up signals 258 throughout the network and only power up what needs to be woken up.

In some example embodiments, the wake-up signals 258 can also be sent over the communication network bus and the power switches can be coupled to the PHY circuits to listen for any such wake-up signals 258 on the communications bus if the PHY circuit happens to be powered on. In various example embodiments, the e-switches 220 through 236 can be directly coupled to the communication bus 256 using proper decouplers so as to receive and process the wake-up signals 258 via this second path as well.

Various instructions and/or operational steps discussed in the above Figures can be executed in any order, unless a specific order is explicitly stated. Also, those skilled in the art will recognize that while some example sets of instructions/steps have been discussed, the material in this specification can be combined in a variety of ways to yield other examples as well, and are to be understood within a context provided by this detailed description.

In some example embodiments these instructions/steps are implemented as functional and software instructions. In other embodiments, the instructions can be implemented either using logic gates, application specific chips, firmware, as well as other hardware forms.

In some example embodiments these instructions/steps are embodied as a set of executable instructions in a non-transitory computer-readable or computer-usable media which are effected on a computer or machine programmed with and controlled by said executable instructions. Said instructions are loaded for execution on a processor (such as one or more CPUs) or a state machine. Said processor includes microprocessors, microcontrollers, processor modules or subsystems (including one or more microprocessors or microcontrollers), or other control or computing devices. A processor can refer to a single component or to plural components. Said computer-readable or computer-usable storage medium or media is (are) considered to be part of an article (or article of manufacture). An article or article of manufacture can refer to any manufactured single component or multiple components. The non-transitory machine or computer-usable media or mediums as defined herein excludes signals, but such media or mediums may be capable of receiving and processing information from signals and/or other transitory mediums.

It will be readily understood that the components of the embodiments as generally described herein and illustrated in the appended figures could be arranged and designed in a wide variety of different configurations. Thus, the detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment," "an embodiment," or similar language means that a particular feature, structure, or characteristic described in connection with the indicated embodiment is included in at least one embodiment of the present invention. Thus, the phrases "in one embodiment," "in an embodiment," and similar language throughout this specification may, but do not necessarily, all refer to the same embodiment.

## Claims

1. A module, comprising:
a set of e-switches configured to be coupled to a power supply line and a set of loads;
a communications circuit coupled to the e-switches and configured to be coupled to a communications bus;
a controller coupled to the e-switches and the communications circuit;
wherein the communications circuit and the controller are powered by the e-switches;
wherein the communications circuit and the controller are configured to be in a low-power state until receiving a wake-up signal from the e-switches; and
wherein the e-switches are configured to receive the wake-up signal over the power supply line.

2. The module of claim 1:
wherein each of the e-switches each have a unique address; and
wherein at least one of the e-switches is configured to send the wake-up signal directly to another one of the e-switches by including the unique address in the wake-up signal.

3. The module of claim 1 or 2:
wherein the e-switches are configured to receive the wake-up signal over both the power supply line and the communications bus.

4. The module of claim 1 or 2:
wherein the e-switches only receive the wake-up signal over the power supply line.

5. The module of any preceding claim:
wherein the e-switches control power going to the set of loads.

6. The module of any preceding claim:
wherein an e-switch is configured to continue to supply power to a load even after putting the e-switch itself into a low-power mode.

7. The module of any preceding claim:
wherein the communications circuit is a PHY circuit.

8. The module of any preceding claim:
wherein the communications bus is either a CAN bus or an Ethernet bus.

9. The module of any preceding claim:
wherein the module is embedded in a software defined vehicle (SDV).

10. The module of any preceding claim:
wherein the wake-up signal is indicated by either a change in a voltage level or a change in a voltage polarity on the power supply line.

11. The module of any preceding claim:
wherein the module is a first module;
further comprising a second module and a third module;
wherein the first module is coupled to the second module via a first e-switch in the second module; and
wherein the third module is coupled to the second module via a second e-switch in the second module.

12. The module of claim 11:
wherein the second and third modules each include a set of elements that are functional duplicates of those in the first module.

13. The module of claim 11 or 12:
wherein the first e-switch in the second module is configured to receive a wake-up signal sent from an e-switch in the first module that is addressed to an e-switch in the third module.

14. The module of claim 13:
wherein the first e-switch in the second module directly passes the received wake-up signal to the second e-switch in the second module.

15. The module of claim 14:
wherein the second e-switch in the second module directly passes the received wake-up signal to the addressed e-switch in the second module.
